(19) Europäisches Patentamt / European Patent Office / Office européen des brevets

(11) **EP 1 975 582 B1**

(12) **EUROPÄISCHE PATENTSCHRIFT**

(45) Veröffentlichungstag und Bekanntmachung des Hinweises auf die Patenterteilung:
**05.06.2013 Patentblatt 2013/23**

(51) Int Cl.:
**G01K 17/10** (2006.01)   **F24D 19/10** (2006.01)

(21) Anmeldenummer: **07022816.8**

(22) Anmeldetag: **24.11.2007**

(54) **Kälte- oder Wärmezählereinrichtung zur Ermittlung des Energieverbrauchs in einem Temperierungskreislauf**

Heating or cooling counter device for determining the energy consumption in a temperature controlling loop

Compteur de froid ou de chaud pour déterminer la consommation d'énergie dans un circuit d'équilibrage de température

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **29.03.2007 DE 102007015609**

(43) Veröffentlichungstag der Anmeldung:
**01.10.2008 Patentblatt 2008/40**

(73) Patentinhaber: **Hydrometer GmbH**
**91522 Ansbach (DE)**

(72) Erfinder: **Schulze, Manfred**
**91522 Ansbach (DE)**

(74) Vertreter: **Blaumeier, Jörg**
**LINDNER I BLAUMEIER**
**Patent- und Rechtsanwälte**
**Dr.-Kurt-Schumacher-Strasse 23**
**90402 Nürnberg (DE)**

(56) Entgegenhaltungen:
**EP-A- 0 348 245       DE-A1- 2 504 797**
**DE-A1- 2 711 437       DE-A1- 19 739 367**
**US-A- 4 440 507**

**Beschreibung**

Die Erfindung betrifft eine Kälte- oder Wärmezählereinrichtung zur Ermittlung des Energieverbrauchs in einem Temperierungskreislauf, in dem ein Gemisch aus wenigstens zwei Flüssigkeiten, insbesondere ein Wasser-Glykol-Gemisch zirkuliert, mit einer Messvorrichtung zur Ermittlung des Gemischdurchflusses und einer Temperaturdifferenz zwischen dem Vorlauf und dem Rücklauf des Gemischs, welche Messvorrichtung unter Berücksichtigung des Durchflusses und der Temperaturdifferenz den Energieverbrauch ermittelt.

Die Raumtemperatur in Gebäuden wird zunehmend über Wärme- oder Kühlkreisläufe temperiert. Neben Wasser wird häufig auch ein Wasser-Glykol-Gemisch als Kälte- oder Wärmeträgermedium verwendet. In einem solchen Temperierungskreislauf kann häufig auch eine Sonnenkollektorenanordnung integriert sein, über welche Heizwärme erzeugt wird. Auch in solchen Kreisläufen wird wegen der niedrigen Temperaturen im Winter als Trägermedium häufig ein Wasser-Glykol-Gemisch verwendet.

Um den Energieverbrauch zu ermitteln, ist eine Messvorrichtung vorgesehen. Während bei Verwendung von Wasser als Wärme- oder Kälteträgermedium die Messvorrichtung als an sich bekannter Wärmezähler ausgeführt sein kann, bedarf die Ermittlung des Energieverbrauchs bei Verwendung eines Flüssigkeitsgemisches, insbesondere eines Wasser-Glykol-Gemisches, einer besonderen Berücksichtigung besonderer physikalischer Parameter der beiden Flüssigkeiten sowie des Mischungsverhältnisses. Zu diesem Zweck kann bei bekannten Messvorrichtungen, die bekanntlich über eine geeignete Recheneinrichtung verfügen, beispielsweise die Glykolart sowie das Mischungsverhältnis Wasser : Glykol eingestellt werden. Hierfür erforderlich ist allerdings eine vorherige Bestimmung des Mischungsverhältnisses. Dies erfolgt über eine Probenentnahme und eine nachfolgende Messung, z. B. wird hierbei über ein Refraktometer oder eine Messspindel die Dichte des Gemischs ermittelt und anschließend über eine Tabelle das korrekte Mischungsverhältnis bestimmt. Über die hierüber ermittelte Dichte bzw. das Mischungsverhältnis wird sodann die spezifische Wärmekapazität des Gemisches bestimmt. Dies ist jedoch nur relativ ungenau möglich, da die Dichte des Glykol mit $\rho_{Gl}$ = 1,113 g/cm$^3$ für Ethylenglykol nur um ca. 11 % größer ist als die Dichte des Wassers mit $\rho_W$ = 1 g/cm$^3$, die Dichte von Propylenglykol beträgt nur $\rho_{Gl}$ = 1,04 g/cm$^3$, hier beträgt die Differenz nur 4 %. Demgegenüber unterscheiden sich die spezifischen Wärmekapazitäten von Wasser und Glykol deutlich. Während die spezifische Wärmekapazität von Wasser $c_W$ = 4.180 J/kg K beträgt, beträgt die spezifische Wärmekapazität von Glykol $c_{Gl}$ = 2.690 J/kg K (Ethylenglykol), das heißt, die Wärmekapazität von Glykol beträgt nur ca. 64 % der des Wassers. Hieraus ergibt sich zwangsläufig, dass eine ungenaue Dichtebestimmung zwangsläufig zu einer relativ ungenauen Bestimmung der spezifischen Wärmekapazität des Gemisches führt. Da aber die spezifische Wärmekapazität in die Ermittlung des Energieverbrauchs eingeht, ergibt sich zwangsläufig in solchen Fällen auch nur eine relativ ungenaue Energieverbrauchsbestimmung.

Die Glykolart wie auch das Mischungsverhältnis wird üblicherweise fest am Rechenwerk eingestellt. Im Falle einer Wartung der Anlage oder bei Nachfüllen von Wasser oder von Glykol ist zwangsläufig die Probenentnahme und nachfolgende Dichtemessung etc. mit entsprechendem Aufwand zu wiederholen. Ein weiterer Problempunkt ist, dass mitunter verschiedene Glykolarten verwendet werden, beispielsweise bei einer Wartung oder einem Nachfüllen. Häufig wird entweder Propylenglykol oder Ethylenglykol mit einem Anteil von 20 - 70 %, bevorzugt um ca. 35 %, beigemischt. Es kann nicht sichergestellt werden, dass im Falle einer Wartung oder eines Nachfüllens der bereits im Gemisch befindliche Glykoltyp zugegeben wird, so dass, wenn die andere Glykolart beigemischt wird, zwangsläufig die Einstellung am Rechenwerk nicht stimmt, mithin also auch die Energieermittlung fehlerbehaftet ist.

Aus DE 25 04 797 A1 ist ein Wärmemengenmesser zum Messen der von einem strömenden Medium abgegebenen Wärmemenge bekannt. Der Wärmemengenmesser umfasst Temperaturmessmittel zum Messen der Temperaturdifferenz zwischen der Vorlauf- und der Rücklauftemperatur des Mediums, Volumenmessmittel zum Messen des Volumens des durchströmenden Mediums sowie Mittel zum Berechnen der abgegebenen Wärmemenge aus dem Temperaturunterschied und dem Volumen. Ferner sind Mittel vorgesehen, die die berechnete Wärmemenge mit Hilfe einer linear von der Rücklauftemperatur abhängigen Korrekturgröße k hinsichtlich der sich mit der Temperatur ändernden spezifischen Wärme und Dichte des Mediums korrigieren. Dabei wird die Korrekturgröße k näherungsweise bestimmt, da die dort verwendete Korrekturgröße k temperaturabhängig ist, die Bestimmung erfolgt in Abhängigkeit der Rücklauftemperatur.

Aus DE 27 11 438 A1 ist eine Vorrichtung zur Messung der Wärmemenge bekannt. Es werden der Vorlauftemperatur, der Rücklauftemperatur und dem Durchfluss eines Wärmeträgers entsprechende Analogsignale erzeugt und über eine Rechenschaltung die Temperaturdifferenz mit dem Durchfluss unter Berücksichtigung eines dem temperaturabhängigen Wärmekoeffizienten entsprechenden Faktors multipliziert und dieses Produkt anschließend integriert. Eine Analog-Digital-Umsetzvorrichtung setzt die Vorlauftemperatur-, Rücklauftemperatur- und Durchfluss-Analogsignale in Digitalsignale um, die in einem entsprechenden Digitalspeicher abgelegt werden. Ferner ist ein Festwertspeicher vorgesehen, in dem der Wärmekoeffizient k in Abhängigkeit von wenigstens einem der Temperatursignale digital gespeichert ist. Der Wärmekoeffizient k wird hier also aus dem tabellenartigen Speicher in Abhängigkeit der Temperatur des strömenden Mediums abgerufen. Eine Bestimmung des Wärmekoeffizienten als solchem erfolgt nicht, da in dem Speicher bereits für eine Anzahl unterschiedlicher Temperaturen zugeordnete Werte hinterlegt sind.

Aus DE 197 39 367 A1 ist ein Verfahren zur Optimierung der Bestimmung der geförderten Wärmemengen in Fluiden mit Volumenstromgeber bekannt, das auch die Wärmemengenermittlung eines aus einem Gemisch, nämlich Wasser-Glykol bestehenden Wärmeträgers ermöglicht. Auch aus US 4,440,507 ist ein Verfahren zur Messung der in einem Fluid transportierten Wärmeenergie bekannt, wobei auch hier das Fluid aus einem Gemisch aus Wasser und additiven Substanzen bestehen kann.

Der Erfindung liegt damit das Problem zugrunde, eine Kälte- oder Wärmezählereinrichtung anzugeben, die eine genauere Energieverbrauchsermittlung zulässt.

Zur Lösung dieses Problems vorgesehen ist eine Kälte- oder Wärmezählereinrichtung zur Ermittlung des Energieverbrauchs in einem Temperierungskreislauf, in dem ein Gemisch aus wenigstens zwei Flüssigkeiten, insbesondere ein Wasser-Glykol-Gemisch zirkuliert, mit einer Messvorrichtung zur Ermittlung des Gemischdurchflusses und einer Temperaturdifferenz zwischen dem Vorlauf und dem Rücklauf des Gemischs, welche Messvorrichtung unter Berücksichtigung des Durchflusses und der Temperaturdifferenz den Energieverbrauch ermittelt, wobei die Messvorrichtung unter Berücksichtigung wenigstens eines von einem ihr zugeordneten, im Kreislauf angeordneten Sensormittel gegebenen Messparameters zur Bestimmung des k-Faktors des Gemischs mittels einer Recheneinrichtung und unter Berücksichtigung des k-Faktors zur Bestimmung des Energieverbrauchs ausgebildet ist, wobei das Sensormittel ein kalorimetrisches oder ein anemometrisches arbeitendes Sensormittel ist.

Erfindungsgemäß ist der Messvorrichtung ein Sensormittel zugeordnet oder in dieser integriert, das im Kreislauf angeordnet ist, mithin also einen Messparameter des Gemisches selbst infolge der unmittelbaren Anordnung im Gemisch aufnehmen kann. Dieses Sensormittel bestimmt nun wenigstens einen für die Ermittlung des k-Faktors des Gemischs relevanten Messparameter, welcher Messparameter der Messvorrichtung gegeben wird und in dieser in einem geeigneten Rechenwerk verarbeitet wird. Dieses Rechenwerk ist nun derart ausgebildet, dass der k-Faktor des Gemischs direkt ermittelt werden kann. Bei der erfindungsgemäßen Einrichtung erfolgt also die tatsächliche Ermittlung oder Messung des k-Faktors des Gemisches selbst anhand eines unmittelbar im Gemisch aufgenommenen Messparameters, wobei als Messparameter vorzugsweise über das Sensormittel die Temperatur des Gemischs oder eine anhand mehrerer Temperaturmesswerte des Gemischs ermittelte Temperaturdifferenz ermittelbar ist. Anders als im Stand der Technik ist damit keine Probenentnahme und Dichtemessung etc. erforderlich, worüber nur indirekt ein Rückschluss auf den k-Faktor des Gemischs erfolgen kann. Vielmehr erfolgt bei der erfindungsgemäßen Einrichtung eine unmittelbare Messparameteraufnahme aus dem Gemisch und eine unmittelbare Bestimmung des k-Faktors im Kreislauf selbst.

Die erfindungsgemäß vorgesehene direkte k-Faktor-Bestimmung geht sodann in die Bestimmung des Energieverbrauchs ein. Üblicherweise erfolgt beispielsweise die Bestimmung der verbrauchten Wärmemenge W durch Integration der Wärmeleistung. Es gilt grundsätzlich folgender Zusammenhang:

$$W = k \cdot (T_V - T_R) \int_{\Delta t} \dot{V}\, dt,$$

mit

k = k-Faktor ($k = c_p \cdot \rho$) mit $c_p$ = spezifische Wärmekapazität, p = Dichte
$T_V$ = Vorlauftemperatur
$T_R$ = Rücklauftemperatur

Die Temperaturdifferenz wird zwischen der Vorlauf- und der Rücklauftemperatur im Temperierungskreislauf bestimmt, wozu wie einleitend ausgeführt die Messvorrichtung eine entsprechende Einrichtung zur Ermittlung der Temperaturdifferenz besitzt, umfassend entsprechende Messfühler im Vor- und im Rücklauf, wie an sich bekannt. Das Volumen wird ebenfalls über die Messvorrichtung bestimmt, die einen geeigneten Volumenzähler, beispielsweise einen Ultraschallzähler oder einen Flügelradzähler etc. aufweist, bestimmt. Der k-Faktor ist ein Rechenfaktor, der von der Vor- und Rücklauftemperatur abhängig ist und die Dichte des Gemischs sowie die spezifische Wärmekapazität zusammenfasst bzw. von diesen abhängt. Das heißt, in die Ermittlung der Wärmemenge geht die tatsächliche spezifische Wärmekapazität des Gemischs direkt über den k-Faktor ein. In bekannten Kälte- oder Wärmezählern ist dieser k-Faktor, der auch als Wärmekoeffizient bezeichnet wird, als Tabelle oder analytisch im Rechenwerk hinterlegt. Erfindungsgemäß kann nun dieser k-Faktor wesentlich exakter bestimmt werden, nachdem er über einen direkt aus dem Gemisch ermittelten Messparameter des Gemischs tatsächlich ermittelt wird und nicht nur quasi grob über die externe Dichtemessung bestimmt wird. Über den ermittelten k-Faktor können auch entsprechende Rückschlüsse auf die tatsächliche Dichte des Gemischs erfolgen.

Insgesamt bietet somit die erfindungsgemäße Kälte- oder Wärmezählereinrichtung die Möglichkeit, den tatsächlichen Energieverbrauch, ausgedrückt über die erfasste Wärme- oder Kältemenge, infolge der messtechnischen in-situ-Ermittlung des k-Faktors wesentlich genauer durchzuführen, als dies bisher möglich war. Grundlage hierfür ist das integrierte Sensormittel, das die Aufnahme des wenigstens einen relevanten Messparameters, wie beschrieben bevorzugt der Temperatur des Gemischs oder einer anhand mehrerer Temperaturmesswerte des Gemischs ermittelteTemperaturdifferenz, ermöglicht.

Erfindungsgemäß ist ferner vorgesehen, dass über das Sensormittel als Messparameter die sich bei Zufuhr von Energie zum Gemisch einstellende Temperatur des Gemischs oder eine anhand mehrerer Temperaturmesswerte des Gemischs ermittelte Temperaturdifferenz oder eine zum Erreichen einer bestimmten Temperatur oder einer Temperaturdifferenz nötige zugeführte Energie ermittelbar ist. Anhand der gemessenen Temperatur bzw. der Temperaturänderung bei Gabe einer bestimmten Energiemenge oder der für das Erreichen einer bestimmten Temperaturänderung benötigten Energie, jeweils einer Heizenergie, kann, worauf nachfolgend noch näher eingegangen wird, die genaue Ermittlung des k-Faktors erfolgen.

Als ein solches Sensormittel wird ein kalorimetrisches oder ein anemometrisches arbeitendes Sensormittel verwendet. Je nach verwendetem Sensormittel bzw. dessen Arbeitsprinzip wird ein unterschiedlicher Messparameter aufgenommen, der dann Grundlage für die Bestimmung der spezifischen Wärmekapazität ist. Bevorzugt kommt das Sensormittel in Form eines Mikrosensors zum Einsatz, also eines hochgradig miniaturisierten Sensors, der ohne weiteres an entsprechender Position im Kreislauf integriert werden kann. Eine besonders bevorzugte Erfindungsausgestaltung sieht die Verwendung eines kalorimetrischen oder anemometrischen Sensormittels, insbesondere in Form eines Mikrokalorimeters oder Mikroanemometers vor. Ein solches Mikrosensorgerät wie z.B. ein Mikrokalorimeter umfasst eine Heizeinrichtung und einen oder mehrere Temperatursensoren. Weiterhin ist ein definiertes Messvolumen vorgesehen, beispielsweise von einem $mm^3$. Derart kleine Sensoren sind bekannt und können ohne weiteres hergestellt werden. Das Funktionsprinzip ist zum Einsatz bei der erfindungsgemäßen Kälte- oder Wärmezählereinrichtung derart, dass im Mikrokalorimeter die Erwärmung des Mediums im definierten, bekannten Volumen, hier also des Gemisches in dem beispielsweise einen $mm^3$ großen Volumen, ermittelt wird. Hierzu wird das Gemisch über die Heizeinrichtung durch Eintrag einer bekannten Energiemenge erwärmt, währenddessen der Temperaturanstieg oder die Temperaturdifferenz ermittelt wird. Es gilt hierbei allgemein folgender Zusammenhang:

$$Q_{EI} = c_p \cdot m \cdot \Delta T,$$

mit

$Q_{EI}$ = elektrische Heizleistung.

Wird nun eine bekannte elektrische Heizleistung zugeführt, so kann aus der gemessenen, sich aus der Erwärmung ergebenden Temperaturdifferenz und dem bekannten Volumen der k-Faktor Wärmekapazität bestimmt werden. Als Messparameter wird hier also die Temperatur aufgenommen und der Messvorrichtung gegeben, die die nötige Temperaturdifferenz, die sich durch die Beheizung einstellt, ermittelt. Die elektrische Heizleistung bzw. die eingetragene Heizenergie wie auch das Volumen sind bekannte Betriebsparameter, die seitens des Rechenwerks vorliegen.

Ausgehend von obiger Formel gilt folgender Zusammenhang:

Mit m = Vp und Umstellen ergibt sich

$$c_p = Q_{EI} / (V \cdot \rho \cdot \Delta T)$$

mit k = $c_p\rho$ und Umstellen ergibt sich

$$k = Q / (V\Delta T)$$

Mithin kann hieraus eine genaue Ermittlung des k-Faktors allein aus der zugeführten Energiemenge, dem bekannten Volumen und der gemessenen Temperaturdifferenz bei bekannter zugeführter Energiemenge, oder bei bekanntem Volumen und bekannter Temperaturänderung der gemessenen benötigten Energiemenge zum Erreichen der vorgegebenen Temperaturänderung erfolgen.

Die eingebrachte Heizenergie sollte im Bereich zwischen 10mWs bis 1.000 mWs, insbesondere im Bereich von ca. 100mWs, liegen, die Heizdauer sollte ca. 100ms bis 10s, insbesondere ca. 1 s, betragen. Während der Energieeintragszeit wird das Gemisch im Mikrovolumen erwärmt, zweckmäßigerweise wird während des Energiezufuhrintervalls der Temperaturmesswert mehrmals aufgenommen.

Da die Erwärmung bzw. der Temperaturanstieg des Mikrovolumens während des Energiezuführintervalls nicht zu allen Zeitpunkten linear ist, sondern nur innerhalb eines bestimmten Intervallabschnitts, sieht eine vorteilhafte Weiterbildung der Erfindung vor, dass in der Messvorrichtung oder im Sensormittel mehrere temperaturspezifische Heizkurven abgelegt sind, wobei in Abhängigkeit der mittels eines sensorseitig vorgesehenen Temperaturmessmittels gemessenen Temperatur des Gemischs unter Berücksichtigung der temperaturspezifisch gewählten Heizkurve die Messparameteraufnahme in einem im Wesentlichen linearen Kurvenbereich erfolgt. Über den Temperatursensor des Sensormittels kann zunächst die Ist-Temperatur des Gemischs vor Beginn der Messung bestimmt werden, wonach eine entsprechende zugeordnete Heizkurve gewählt wird. Diese Heizkurve bildet den Verlauf des Temperaturanstiegs im Heizintervall ab. Die Messung der Temperatur erfolgt nun lediglich in dem Bereich, in dem die Heizkurve im Wesentlichen linear ist, welcher lineare Bereich sich einem flach ansteigenden Anfangserwärmungsbereich anschließt und zum Ende in einen wiederum flach auslaufenden Bereich übergeht.

Die Temperaturmessung kann dabei lediglich die Anfangs- und die Endtemperatur erfassen, bevorzugt aber wie beschrieben den Anstieg der Temperatur, da das Volumen nicht vollständig isoliert ist, sondern eine gewisse Wärmeableitung erfolgt. Da die Wärmeableitung konstant und bekannt ist, nachdem das Sensormittel lagefest eingebaut ist, kann auch aus der Anstiegsgeschwindigkeit der Temperaturerhöhung der k-Faktor ermittelt werden.

Ferner können die in der Messvorrichtung oder dem Sensormittel abgelegten Heizkurven auch spezifisch für verschiedene Gemischdurchflüsse sein. Dies ermöglicht die Bestimmung des k-Faktors auch bei einer gegebenen Strömung. Je nach gegebener Strömung, die über den bestimmbaren Durchfluss ermittelbar ist, wird die dieser Strömung zugeordnete Kurve gewählt und der Messung bzw. Auswertung zu Grunde gelegt. Alternativ ist es denkbar, die zur Erreichung einer bestimmten Temperaturerhöhung oder Temperaturdifferenz benötigte Heizleistung zu ermitteln.

Die Messwertermittlung muss nicht kontinuierlich erfolgen, vielmehr ist eine diskontinuierliche Bestimmung des k-Faktors vorgesehen, insbesondere in Messintervallen von wenigstens einem Tag. Denn es ist nicht damit zu rechnen, dass sich die Verhältnisse im Kreislauf häufig ändern, weshalb eine diskontinuierliche, relativ seltene Messung ausreichend ist. Dies ermöglicht es ferner, zur Durchführung der Messung eine integrierte Energieversorgung, insbesondere eine Batterie, zu verwenden, die das Sensormittel versorgt, es ist also kein Netzanschluss oder dergleichen erforderlich. In Verbindung mit den relativ geringen eingetragenen Energiemengen, der relativ geringen Heizzeit und der diskontinuierlichen Messwertermittlung, beispielsweise lediglich einmal pro Tag, ist ein extrem Strom sparender Batteriebetrieb unter Verwendung beispielsweise einer kleinen Lithium-Zelle möglich. Bei einem Energieeintrag von 10mWs - 1000mWs und einer Heizzeit von 100ms - 10s und einer einmaligen Messwertermittlung pro Tag ergibt sich ein geschätzter Jahresenergiebedarf von 1mWh - 100mWh, den eine kleine Knopfzelle ohne weiteres leisten kann.

Das Sensormittel kann entweder als separates Bauteil zur Messvorrichtung entfernt oder benachbart zu dieser im Kühl- oder Wärmemittelkreislauf angeordnet sein. Zur Übertragung der Messwerte ist eine entsprechende Kommunikationsverbindung, sei es drahtgebunden oder per Funk, denkbar. Zu diesem Zweck weist das Sensormittel, insbesondere das Mikrokalorimeter oder Mikroanemometer, ein eigenes Sensorgehäuse auf. Alternativ und besonders bevorzugt befindet sich das Sensormittel aber integriert in der Messvorrichtung und dort in einem entsprechenden Kanalabschnitt, durch den das Gemisch strömt. Dabei sollte das Sensormittel, insbesondere das Mikrokalorimeter, in einem Bereich geringer Srömung oder in einem Strömungstotraum angeordnet sein, damit sichergestellt ist, dass im Falle der Messung das Messergebnis, also die Temperaturerfassung, nicht dadurch verfälscht wird, dass sich das Mikrovolumen strömungsbedingt verändert und es mithin zu einer Fehlmessung kommt. Dem kann aber dadurch begegnet werden, dass wie beschrieben stömungsbezogene Heizkurven, sofern solche verwendet werden, der Auswertung zu Grunde liegen. Denkbar ist es natürlich, die Messwertaufnahme über die Messvorrichtung zu triggern, nämlich dann, wenn diese über die Durchflusserfassung ermittelt, dass gerade keine Strömung gegeben ist, oder ein einen bestimmten Schwellwert unterschreitender Durchfluss und damit eine hinreichend geringe Strömung gegeben ist.

Neben der Kälte- oder Wärmezählereinrichtung selbst betrifft die Erfindung ferner ein Verfahren zur Ermittlung des Energieverbrauchs in einem Temperierungskreislauf enthaltend ein Gemisch aus wenigstens zwei Flüssigkeiten, insbesondere ein Wasser-Glykol-Gemisch, mittels einer Kälte- oder Wärmezählereinrichtung umfassend eine Messvorrichtung zur Ermittlung des Gemischdurchflusses und der Temperaturdifferenz zwischen einem Gemischvor- und einem Gemischrücklauf, bei welchem Verfahren mittels eines im Gemisch angeordneten Sensormittels wenigstens ein Messparameter des Gemischs ermittelt wird und an die Messvorrichtung gegeben wird, die anhand des Messparameters den k-Faktor des Gemischs und unter Berücksichtigung dieses den Energieverbrauch ermittelt, wobei als Sensormittel ein kalorimetrisches oder anemometrisches arbeitendes Sensormittel verwendet wird. Als Sensormittel wird bevorzugt ein Mikrokalorimeter oder Mikroanemometer verwendet, wenngleich auch andere miniaturisierte Sensoreinrichtungen, die die Erfassung eines die Faktorermittlung zulassenden Parameters ermöglichen, eingesetzt werden können. Als Parameter wird über das Sensormittel als Messparameter die Temperatur des Gemischs oder eine anhand mehrerer Temperaturmesswerte des Gemischs ermittelte Temperaturdifferenz oder eine zum Erreichen einer bestimmten Temperatur oder einer Temperaturdifferenz nötige zugeführte Energie ermittelt wird.

Über das Sensormittel, insbesondere das Mikrokalorimeter oder Mikroanemometer, wird zur Erwärmung eines bestimmten Volumens im Rahmen der Ermittlung des Messparameters eine Heizenergie von 10mWs bis 1000mWs, insbesondere von ca. 100mWs, übertragen. Die Energiemenge ist letztlich so zu wählen, dass unter Berücksichtigung der Heizzeit, die 100ms - 10s, insbesondere ca. 1s, betragen sollte, eine ausreichende Erwärmung erreicht wird, so dass mithin auch eine hinreichende Temperaturdifferenz zwischen Anfangs- und Endtemperatur oder ein hinreichender Temperaturanstieg ermittelt werden kann. Als Messparameter wird hierbei wie beschrieben die Temperaturdifferenz oder der Temperaturanstieg sensorseitig ermittelt und an die Messvorrichtung übertragen, woraus diese dann der k-Faktor ermittelt. Ein Anstieg um beispielsweise 10K ist ohne weiteres ausreichend, bevorzugt sollte der Temperaturanstieg wenigstens 20K oder mehr betragen.

In der Messvorrichtung oder im Sensormittel sind ferner mehrere temperaturspezifische Heizkurven abgelegt, wobei in Abhängigkeit der anhand der mittels eines sensorseitig vorgesehenen Temperaturmessmittels gemessenen Temperatur des Gemischs gewählten temperaturspezifischen Heizkurve die Messparameteraufnahme in einem im Wesentlichen linearen Kurvenbereich erfolgt, wobei die Aufnahme der einzelnen Temperaturmesspunkte auch über die Messvorrichtung in Abhängigkeit der gewählten Kurve getriggert erfolgen kann. Die Messwertermittlung erfolgt bevorzugt diskontinuierlich in Messintervallen von wenigstens einem Tag, gegebenenfalls auch von einer Woche.

Weitere Vorteile, Merkmale und Einzelheiten der Erfindung ergeben sich aus dem im folgenden beschriebenen Ausführungsbeispiel sowie anhand der Zeichnungen. Dabei zeigen:

Fig. 1    eine Prinzipdarstellung einer erfindungsgemäßen Kälte- oder Wärmezählereinrichtung,

Fig. 2    eine Prinzipdarstellung eines Mikrosensors, gekoppelt mit der Recheneinrichtung zur Ermittlung des Energieverbrauchs,

Fig. 3    eine Darstellung einer Heizkurve, und

Fig. 4    eine Prinzipdarstellung der Anordnung des Mikrosensors in einem Strömungsrohr der Messvorrichtung.

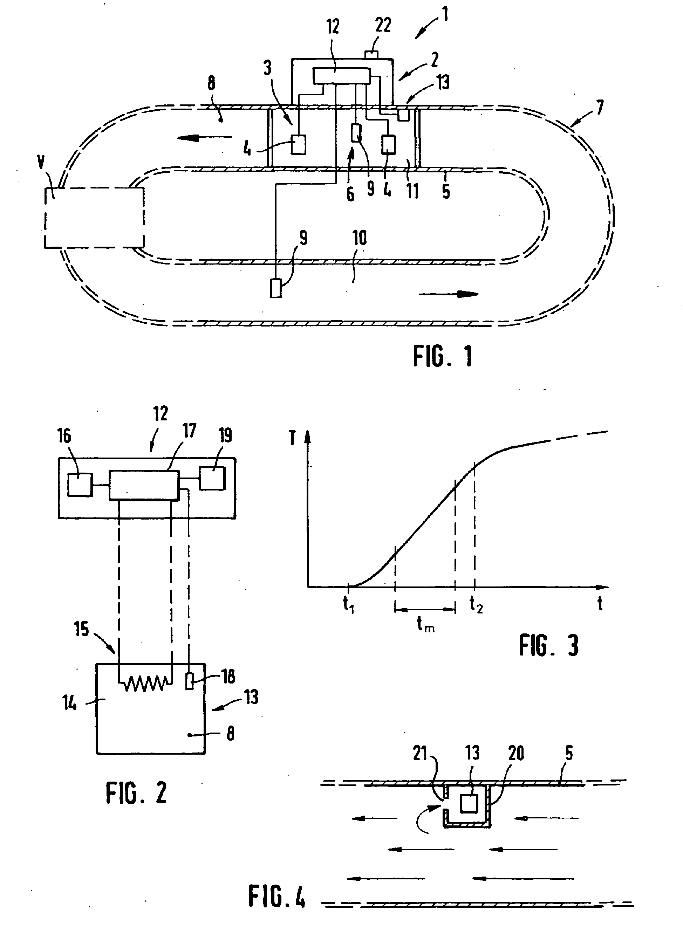

Fig. 1 zeigt in Form einer Prinzipdarstellung eine erfindungsgemäße Kälte- oder Wärmezählereinrichtung 1, umfassend eine Messvorrichtung 2, die zum einen eine Einrichtung 3 umfassend im gezeigten Beispiel zwei Ultraschallmessköpfe 4 zur Ermittlung des Durchflusses durch ein Strömungsrohr 5 der Messvorrichtung 2, zum anderen eine Einrichtung 6 zur Erfassung einer Temperaturdifferenz zwischen dem Vorlauf und dem Rücklauf eines in einem hier nur exemplarisch dargestellten Temperierungskreislauf 7 strömenden Gemischs 8, in welchem Temperierungskreislauf die Messvorrichtung 2 eingebunden ist, aufweist. Diese Temperaturdifferenzmesseinrichtung 6 umfasst zwei Temperatursensoren 9, von denen der eine exemplarisch im Vorlauf 10 und der andere im Rücklauf 11, im gezeigten Beispiel hier in dem Strömungsrohr 5 selbst, angeordnet ist. In dem Kreislauf ist ein oder sind mehrere Kälte- oder Wärmeenergieverbraucher V eingebunden.

Die Messvorrichtung 2 umfasst ferner eine Recheneinrichtung 12, der die Messdaten der Durchflussmesseinrichtung 3 sowie der Temperaturdifferenzmesseinrichtung 6 gegeben werden, und die anhand dieser Daten den Gemischdurchfluss sowie die Temperaturdifferenz bestimmt. Die Messvorrichtung weist ferner eine geeignete Anzeige zum Darstellen der ermittelten Durchfluss- und Verbrauchswerte etc. sowie eine Taste auf, um möglicherweise bestimmte Werte konkret abzufragen, wie auch eine Datenschnittstelle um diese ermittelten Verbrauchs- und sonstigen Daten gegebenenfalls per Draht oder per Funk übertragen zu können.

Vorgesehen ist ferner ein Sensormittel 13, das im gezeigten Beispiel in der Messvorrichtung 2 integriert ist, jedoch auch als separates Bauteil vorgesehen sein kann. Auch das Sensormittel 13 ist mit der Recheneinrichtung 12 verbunden. Es dient dazu, einen Messparameter oder Messwert des Gemisches 8 zu ermitteln, anhand welchem die Recheneinrichtung 12 in der Lage ist, den k-Faktor des Gemischs 8 direkt zu bestimmen. Dieser k-Faktor des Gemischs 8 geht sodann in die von der Recheneinrichtung 16 durchgeführte Ermittlung des Energieverbrauchs ein, im Rahmen welcher wiederum der Gemischdurchfluss sowie die Temperaturdifferenz zwischen Vor- und Rücklauf berücksichtigt wird.

Der Bestimmung des k-Faktors und damit der wesentlich genaueren Ermittlung des Energieverbrauchs liegt Folgendes zugrunde:

Aus der Literatur, Prof. Franz Adunka, Theorie der exakten Wärmemengenmessung, Vulkan Verlag, Essen 1984, S. 16 ff., ist bekannt, dass die abgegebene Wärmemenge wie folgt bestimmt wird:

$$W = \int_{\Delta t} \dot{m} \; \Delta h \cdot dt, \text{ mit}$$

W = Wärmemenge, $\dot{m}$ = Massenstrom, $\Delta$h = Differenz der spezifischen Enthalpie zwischen Vor- und Rücklauf.

Die Enthalpie ist ein Maß für die innere Energie eines thermodynamischen Systems. Sie setzt sich zusammen aus der inneren Energie U und der Volumenarbeit pV. Die innere Energie besteht aus der kinetischen und potenziellen Energie der Komponenten (Elemente, Moleküle) des Systems. Dazu gehören die Translation von Atomen, Molekülen sowie die Rotation und Oszillation. Die Volumenarbeit ist die Arbeit, die gegen den Druck P verrichtet werden muss, um das Volumen V zu erzeugen, das vom System im betrachteten Zustand eingenommen wird. Da die Enthalpie nicht direkt bestimmt werden kann, gilt in der Praxis für inkompressible Medien bei konstantem Druck in guter Näherung nach Adunka

$$W = \int_{\Delta t} c_p \, (T_V - T_R) \, \dot{m} \, dt$$

W = Wärmemenge
$c_p$ = spezifische Wärmekapazität
$T_V$ = Vorlauftemperatur
$T_R$ = Rücklauftemperatur
$\dot{m}$ = Massenstrom

Die spezifische Wärmekapazität eines Stoffes bezeichnet die auf die Masse bezogene Wärmekapazität. Sie gibt also an, welche Energie man einer bestimmten Masse eines Stoffes zuführen muss, um seine Temperatur um ein Kelvin zu erhöhen. Die spezifische Wärmekapazität ist für Wasser bekannt und wird vom Messgerät entsprechend berücksichtigt. Hingegen ist die Wärmekapazität von beliebigen Wasser-Gylkol-Gemischen nicht bekannt und muss spezifisch vor Ort ermittelt werden.

In der Praxis werden ausnahmslos volumetrische Verfahren zur Bestimmung der Masse m eingesetzt.

Es gilt

$$m = V\rho \text{ bzw. } \dot{m} = \dot{V} \, \rho, \text{ mit}$$

$\rho$ = Dichte; V = Volumen

Damit gilt zur Bestimmung der Wärmemenge W im Heizkreislauf bzw. Kühlkreislauf:

$$W = \int_{\Delta t} c_p \, (T_V - T_R) \, \dot{V} \, \rho \, dt$$

bzw.

$$W = c_p \, \rho \, (T_V - T_R) \int_{\Delta t} \dot{V} \, dt$$

Die Konstanten werden zum k-Faktor zusammengefasst.

$$k = c_p \, \rho$$

$$W = k \, (T_V - T_{R)} \int_{\Delta t} \dot{V} \, dt$$

Der k-Faktor wird auch als Wärmekoeffizient bezeichnet.

Aufgabe der Erfindung ist es, den k-Faktor des vorhandenen Wärmeträger- bzw. Kälteträgermediums direkt zu bestimmen. Dies geschieht bisher über den Umweg einer Probenentnahme, Dichtebestimmung und entsprechender Tabellen.

Die Gleichung, um Wärmeenergie Q, Masse m, Temperaturänderung $\Delta T$ und spezifische Wärmekapazität $c_p$ in Zusammenhang zu bringen, ist:

$$Q = c_p \cdot m \cdot \Delta T$$

Mit $m = V\rho$ und Umstellen ergibt sich

$$c_p = Q / (V \cdot \rho \cdot \Delta T)$$

mit $k = c_p\rho$ und Umstellen ergibt sich

$$k = Q / (V\Delta T)$$

Damit kann, wie obige Formel zeigt, durch Zuführung einer definierten elektrischen Energie Q in ein Probevolumen (Mikrovolumen) und Messung der erzeugten Temperaturänderung der k-Faktor direkt bestimmt werden. Alternativ kann auch statt der Temperaturänderung die notwendige elektrische Energie zur Erzeugung eine definierten Temperaturänderung bestimmt werden, der rechnerische Zusammenhang bleibt der gleiche.

Der k-Faktor wird also direkt aus der zugeführtem, bekannten elektrischen Energie, hier der Heizenergie, dem ebenfalls bekannten Messvolumen, das beheizt wird, und der vor Ort und in-situ gemessenen Temperaturänderung errechnet. Der einzige benötigte und aktuell aufzunehmende Rechenwert ist also die Temperatur bzw. die zu ermittelnde Temperaturdifferenz. Unter Verwendung eines entsprechenden Sensormittels kann damit zu jedem Zeitpunkt die exakte Erfassung des k-Faktors und damit die genaue Bestimmung der Verbrauchswerte auf einfache und direkte Weise erfolgen.

Fig. 2 zeigt das zur Ermittlung des zur Faktorermittlung nötigen Temperatur- oder Heizenergieparameters dienende Sensormittel 13 in Form einer Prinzipdarstellung. Das Sensormittel 13 ist z.B. ein Mikrokalorimeter, das miniaturisiert hergestellt werden kann und Abmessungen von nur wenigen Millimetern aufweist. Vom Prinzip her umfasst das Sensormittel 13 ein definiertes Volumen 14, beispielsweise von 1 mm³. Das Volumen 14 ist mit Gemisch 8 gefüllt. Es versteht sich von selbst, dass das Gemisch 8 in dieses Volumen einströmen kann, es ist also nicht geschlossen. Vielmehr ist ein langsamer Austausch des Gemisches über die Betriebszeit möglich, so dass sichergestellt ist, dass im Volumen 14 stets das Gemisch vorhanden ist, das auch im übrigen Kreislauf vorhanden ist.

Dem Volumen 14 ist eine Heizeinrichtung 15 zugeordnet, die über die Recheneinrichtung 12 angesteuert wird. Die Versorgung der Heizeinrichtung erfolgt über eine im gezeigten Beispiel in der Recheneinrichtung 12 an der Messvorrichtung 2 beliebig positionierbare Energieversorgung 16 in Form beispielsweise einer kleinen Knopfzelle. Zur Steuerung des Heizbetriebes ist ein Mikroprozessor 17 vorgesehen, der die gesamte Berechnung, Auswertung und Energieverbrauchsermittlung etc. vornimmt.

Im Volumen 14 befindet sich ferner ein Temperatursensor 18, der die Temperatur des Gemischs 8 im Volumen 14 bestimmt.

Zur Ermittlung des k-Faktors wird nun zunächst über den Temperatursensor 18 die Ist-Temperatur des Gemischs 8 im Volumen 14 bestimmt. In der Recheneinrichtung 12 bzw. einem dem Mikroprozessor 17 zugeordneten Speicher 19 ist eine Schar an Heizkurven abgelegt, die temperaturspezifisch (und gegebenenfalls strömungsmengenspezifisch) sind, also stets einem bestimmten Ist-Temperaturintervall zugeordnet sind. In Abhängigkeit der gemessenen Ist-Temperatur wird nun die Heizkurve gewählt, die der Ist-Temperatur entspricht oder zugeordnet ist. Fig. 3 zeigt exemplarisch eine solche Heizkurve, bei der längs der Abszisse die Zeit t und längs der Ordinate die Temperatur T aufgetragen ist. Diese Kurve gibt den Verlauf der Temperaturänderung bei Eintrag von Heizenergie in das Volumen 14 wieder. Nach Auswahl der Heizkurve wird über den Mikroprozessor 17 der Heizbetrieb im Zeitpunkt $t_1$ angestoßen, die Heizeinrichtung wird also bestromt, das Volumen 14 und damit das Gemisch 8 erwärmt sich. Die Heizenergie wird im Intervall $t_1$ - $t_2$ eingetragen, dieses beträgt beispielsweise eine Sekunde. Die Heizenergie beträgt beispielsweise 100mWs. Ersichtlich steigt zu Beginn die Temperatur etwas langsam an, sodann erfolgt ein im Wesentlichen linearer Anstiegsbereich, wonach nach Ende der Energiezufuhr die Temperatur noch etwas ansteigt, jedoch langsamer. Im Messintervall $t_m$ erfolgt nun die Messung der Temperatur über den Temperatursensor 18. Dieses Messintervall $t_m$ beträgt beispiels-

weise 0,5 s. Innerhalb dieses Intervalls erfolgen beispielsweise fünf oder zehn Messungen, so dass eine entsprechende Messparameteranzahl vorliegt. Die Messwerte werden dem Mikroprozessor 17 gegeben. Dieser kann nun den k-Faktor anhand dieser Messparameter ermitteln, wobei folgender Zusammenhang gilt:

$$Q_{EI} = c_p \cdot m \cdot \Delta T,$$

wobei
$Q_{EI}$ = elektrische Heizenergie,
$c_p$ = spezifische Wärmekapazität des Gemischs,
m = Masse des Gemischs im Volumen,
$\Delta T$ = Temperaturdifferenz (z. B. zwischen Anfangs- und Endtemperatur)
Hieraus ergibt sich der k-Faktor wie folgt:
Mit m = V$\rho$ und Umstellen ergibt sich

$$c_p = Q_{EI} / (V \cdot \rho \cdot \Delta T)$$

und mit k = $c_p\rho$ und Umstellen ergibt sich schließlich

$$k = Q_{EI} / (V \cdot \Delta T)$$

Ersichtlich wird der k-Faktor direkt ohne Umweg über eine Ermittlung der Wärmekapazität oder der Dichte bestimmt.
Die zugeführte elektrische Heizenergie ist bekannt, beispielsweise 100mWs, gleichermaßen die Masse des Gemischs im Volumen 14, die bei einem 1mm$^3$ rund 1 mg beträgt, nachdem der Einfluss der Dichtedifferenz näherungsweise vernachlässigt werden kann. Die Temperaturdifferenz oder der Temperaturanstieg ist über die Messparameter ebenfalls bekannt. Hieraus kann nun der k-Faktor errechnet werden.
Die Messung erfolgt bevorzugt bei Strömungsstillstand, was aber ohne weiteres über die Durchflussmesseinrichtung erfasst werden kann. Der Mikroprozessor 17 triggert also die Messung, wenn Strömungsstillstand gegeben ist. Zweckmäßig ist es in diesem Zusammenhang grundsätzlich, wie in Fig. 4 gezeigt, das Sensormittel 13 an einer Stelle im Strömungsrohr 5 anzuordnen, an der das Sensormittel 13 nicht unmittelbar der Strömung ausgesetzt ist. Im gezeigten Beispiel gemäß Fig. 4 ist eine allseitige Trennwand 20 vorgesehen, die eine Einlassöffnung 21 aufweist, über die ein Gemischaustausch erfolgen kann. Während der Messung, die wie gesagt z. B. nur im Bereich einer oder weniger Sekunden liegt, kann so sichergestellt werden, dass es zu keiner Strömungsbeeinflussung kommt. Werden strömungsspezifisch ausgelegte Heizkurven verwendet, ist auch eine Ermittlung des Faktor bei einer gegebenen Strömung möglich.
Ausgehend vom ermittelten k-Faktor kann nun die Ermittlung des Energieverbrauchs erfolgen, der k-Faktor bleibt bis zur nächsten Messung, die beispielsweise am nächsten Tag oder in der nächsten Woche erfolgt, gespeichert und wird zur Verbrauchsmessung verwendet. Die Wärmemenge ergibt sich beispielsweise wie folgt:

$$W = k \cdot (T_V - T_R) \int_{\Delta t} \dot{V} \Delta t \quad \text{bzw.} \quad W = k \cdot \Delta T \int_{\Delta t} \dot{V} \Delta t,$$

wobei
W = Wärmemenge,
k = Wärmekoeffizient oder k-Faktor (mit k = $c_p \cdot \rho$),
$\Delta T$ = Temperaturdifferenz zwischen Vor- und Rücklauf.
Zur weiteren Genauigkeit der Ermittlung des k-Faktors ist es noch möglich, über ein Einstellmittel 22 zu definieren, welche dem Wasser zugemischte Flüssigkeit verwendet wurde, also welcher Glykoltyp das Gemisch bildet. Hierüber kann im Rahmen der Faktorermittlung eine noch größere Genauigkeit erzielt werden.
Insgesamt bietet das erfindungsgemäße Verfahren bzw. die erfindungsgemäße Zählereinrichtung die Möglichkeit der in situ-Messung des k-Faktors des Trägergemischs im Wärme- oder Kältezähler, was durch Verwendung eines mikrothermischen Sensormittels möglich ist, ohne dass besondere Kenntnisse über das verwendete Kälte- oder Wärmeträgergemisch gefordert sind. Dies ermöglicht es, eichfähige Wärme- und Kältezählereinrichtungen für Gemische, insbesondere Wasser-Glykol-Gemische, zu schaffen, was bisher nicht möglich war, da wie einleitend beschrieben nur eine relativ ungenaue, extern über Probenentnahme vorzunehmende Dichtemessung und darauf gestützt indirekt die Faktorbestimmung erfolgte.

**Patentansprüche**

1.  Kälte- oder Wärmezählereinrichtung zur Ermittlung des Energieverbrauchs in einem Temperierungskreislauf, in dem ein Gemisch aus wenigstens zwei Flüssigkeiten, insbesondere ein Wasser-Glykol-Gemisch zirkuliert, mit einer Messvorrichtung zur Ermittlung des Gemischdurchflusses und einer Temperaturdifferenz zwischen dem Vorlauf und dem Rücklauf des Gemischs, welche Messvorrichtung unter Berücksichtigung des Durchflusses und der Temperaturdifferenz den Energieverbrauch ermittelt, wobei die Messvorrichtung (2) unter Berücksichtigung wenigstens eines von einem ihr zugeordneten, im Kreislauf (7) angeordneten Sensormittel (13) gegebenen Messparameters zur Bestimmung des k-Faktors des Gemischs (8) mittels einer Recheneinrichtung (12) und unter Berücksichtigung des k-Faktors zur Bestimmung des Energieverbrauchs ausgebildet ist, wobei das Sensormittel (13) ein kalorimetrisches oder ein anemometrisches arbeitendes Sensormittel ist.

2.  Kälte- oder Wärmezählereinrichtung nach Anspruch 1 oder 2, **dadurch gekennzeichnet, dass** das Sensormittel (13) ein Mikrokalorimeter oder Mikroanemometer ist.

3.  Kälte- oder Wärmezählereinrichtung nach einem der vorangehenden Ansprüche, **dadurch gekennzeichnet, dass** das Sensormittel (13) in die Messvorrichtung (2) integriert ist.

4.  Kälte- oder Wärmezählereinrichtung nach einem der Ansprüche 1 bis 3, **dadurch gekennzeichnet, dass** das Sensormittel (13), insbesondere das Mikrokalorimeter oder Mikroanemometer in einem eigenen Sensorgehäuse, ein zur Messvorrichtung separates Bauteil bildend, angeordnet ist.

5.  Kälte- oder Wärmezählereinrichtung nach einem der vorangehenden Ansprüche, **dadurch gekennzeichnet, dass** das Sensormittel (13), insbesondere das Mikrokalorimeter oder Mikroanemometer in einem Bereich geringer Strömung oder in einem Strömungstotraum angeordnet ist.

6.  Kälte- oder Wärmezählereinrichtung nach einem der vorangehenden Ansprüche, **dadurch gekennzeichnet, dass** über das Sensormittel als Messparameter die Temperatur des Gemischs oder eine anhand mehrerer Temperaturmesswerte des Gemischs ermittelte Temperaturdifferenz oder eine zum Erreichen einer bestimmten Temperatur oder einer Temperaturdifferenz nötige zugeführte Energie ermittelbar ist.

7.  Kälte- oder Wärmezählereinrichtung nach Anspruch 6, **dadurch gekennzeichnet, dass** über eine Heizeinrichtung (15) des Sensormittels (13), insbesondere des Mikrokalorimeters oder Mikroanemometers zur Erwärmung eines bestimmten Volumens (14) im Rahmen der Ermittlung des Messparameters eine Heizenergie, vorzugsweise von 10mWs bis 1000mWs, insbesondere 100mWs übertragbar ist.

8.  Kälte- oder Wärmezählereinrichtung Anspruch 7, **dadurch gekennzeichnet, dass** die Energie über die Heizeinrichtung (15) des Sensormittels (13) für 100ms bis 10s, insbesondere für 1 s zuführbar ist.

9.  Kälte- oder Wärmezählereinrichtung nach Anspruch 8, **dadurch gekennzeichnet, dass** innerhalb des Energiezufuhrintervalls der Messwert mehrmals, insbesondere 10 mal pro Sekunde während der Energiezufuhr aufnehmbar ist.

10. Kälte- oder Wärmezähleinrichtung nach einem der Ansprüche 7 bis 9, **dadurch gekennzeichnet, dass** in der Messvorrichtung (2) oder im Sensormittel (13) mehrere temperaturspezifische Heizkurven abgelegt sind, wobei in Abhängigkeit der anhand der mittels eines sensorseitig vorgesehenen Temperaturmessmittels (18) gemessenen Temperatur des Gemischs (8) gewählten temperaturspezifischen Heizkurve die Messparameteraufnahme in einem im Wesentlichen linearen Kurvenbereich erfolgt.

11. Kälte- oder Wärmezählereinrichtung nach Anspruch 10, **dadurch gekennzeichnet, dass** die in der Messvorrichtung oder dem Sensormittel abgelegten Heizkurven ferner spezifisch für verschiedene Gemischdurchflüsse sind.

**12.** Kälte- oder Wärmezählereinrichtung nach einem der vorangehenden Ansprüche, **dadurch gekennzeichnet, dass** die Messwertermittlung diskontinuierlich, insbesondere in Messintervallen von wenigstens einem Tag erfolgt.

**13.** Kälte- oder Wärmezählereinrichtung nach einem der vorangehenden Ansprüche, **dadurch gekennzeichnet, dass** eine integrierte Energieversorgung (16), insbesondere eine Batterie zur Versorgung des Sensormittels (13) vorgesehen ist.

**14.** Kälte- oder Wärmezählereinrichtung nach einem der vorangehenden Ansprüche, **dadurch gekennzeichnet, dass** an der Messvorrichtung (2) die Art einer der Gemischflüssigkeiten, insbesondere des Glykols einstellbar und die Messvorrichtung (2) in Abhängigkeit der Einstellung zur Berücksichtigung eines oder mehrerer in ihr hinterlegter, artspezifischer Rechenwerte im Rahmen der Ermittlung der spezifischen Wärmekapazität oder des Energieverbrauchs ausgebildet ist.

**15.** Verfahren zur Ermittlung des Energieverbrauchs in einem Temperierungskreislauf enthaltend ein Gemisch aus wenigstens zwei Flüssigkeiten, insbesondere ein Wasser-Glykol-Gemisch, mittels einer Kälte- oder Wärmezählereinrichtung umfassend eine Messvorrichtung zur Ermittlung des Gemischdurchflusses und der Temperaturdifferenz zwischen einem Gemischvor- und einem Gemischrücklauf, bei welchem Verfahren mittels eines im Gemisch angeordneten Sensormittels wenigstens ein Messparameter des Gemischs ermittelt wird und an die Messvorrichtung gegeben wird, die anhand des Messparameters mittels einer Recheneinrichtung den k-Faktor des Gemischs und unter Berücksichtigung des k-Faktors den Energieverbrauch ermittelt, wobei als Sensormittel ein kalorimetrisch oder anemometrisch arbeitendes Sensormittel verwendet wird.

**16.** Verfahren nach Anspruch 15, **dadurch gekennzeichnet, dass** über das Sensormittel als Messparameter die Temperatur des Gemischs oder eine anhand mehrerer Temperaturmesswerte des Gemischs ermittelte Temperaturdifferenz oder eine zum Erreichen einer bestimmten Temperatur oder einer Temperaturdifferenz nötige zugeführte Energie ermittelt wird.

**17.** Verfahren nach Anspruch 15, **dadurch gekennzeichnet, dass** als Sensormittel ein Mikrokalorimeter oder ein Mikroanemometer verwendet wird.

**18.** Verfahren nach Anspruch 16 oder 17, **dadurch gekennzeichnet, dass** über das Sensormittel, insbesondere das Mikrokalorimeter oder Mikroanemometer zur Erwärmung eines bestimmten Volumens im Rahmen der Ermittlung des Messparameters eine Heizenergie, vorzugsweise von 10mWs bis 1000mWs, insbesondere 100mWs übertragen wird.

**19.** Verfahren nach Anspruch 18, **dadurch gekennzeichnet, dass** die Energie über das Sensormittel für 100ms bis 10s, insbesondere für 1s zugeführt wird.

**20.** Verfahren nach einem der Ansprüche 16 bis 19, **dadurch gekennzeichnet, dass** innerhalb des Energiezufuhrintervalls der Messwert mehrmals, insbesondere 10 mal pro Sekunde während der Energiezufuhr aufgenommen werden.

**21.** Verfahren nach Anspruch 20, **dadurch gekennzeichnet, dass** in der Messvorrichtung oder im Sensormittel mehrere temperaturspezifische Heizkurven abgelegt sind, wobei in Abhängigkeit der mittels eines sensorseitig vorgesehenen Temperaturmessmittels gemessenen Temperatur des Gemischs unter Berücksichtigung der temperaturspezifisch gewählten Heizkurve die Messparameteraufnahme in einem im Wesentlichen linearen Kurvenbereich erfolgt.

**22.** Verfahren nach einem der Ansprüche 15 - 21, **dadurch gekennzeichnet, dass** die Messwertermittlung diskontinuierlich, insbesondere in Messintervallen von wenigstens einem Tag erfolgt.

**Claims**

**1.** A cooling or heating metering device for determining the energy consumption in a tempering circuit in which a mixture comprising at least two liquids, especially a water-glycol mixture, is circulating, with a measuring device for determining the through-flow of the mixture and a temperature difference between the forward flow and the return flow of the mixture, which measuring device determines the energy consumption taking into consideration the through-flow and the temperature difference,

whereas the measuring device (2) is embodied to determine the energy consumption taking into consideration at least one measurement parameter provided by a sensor means (13) associated with it which is arranged in the circuit (7) in order to determine the k-factor of the mixture (8) by means of a computer device (12) and taking into consideration the k-factor,

whereas the sensor means is a sensor means operating in a calorimetric or anemometric manner.

2. The cooling or heating metering device according to claim 1 or 2,
**characterised in that**
the sensor means (13) is a micro-calorimeter or a micro-anemometer.

3. The cooling or heating metering device according to any one of the preceding claims,
**characterised in that**
the sensor means (13) is integrated in the measuring device (2).

4. The cooling or heating metering device according to any one of claims 1 to 3,
**characterised in that**
the sensor means (13), especially the micro-calorimeter or micro-anemometer, is arranged in its own sensor housing, forming a component separate from the measuring device.

5. The cooling or heating metering device according to any one of the preceding claims,
**characterised in that**
the sensor means (13), especially the micro-calorimeter or micro-anemometer, is arranged in a region of reduced flow or in a dead-flow zone.

6. The cooling or heating metering device according to any one of the preceding claims,
**characterised in that**
the temperature of the mixture, or a temperature difference determined with reference to several measured temperature values of the mixture, or a supplied energy required to reach a given temperature or temperature difference can be specified via the sensor means as measurement parameters.

7. The cooling or heating metering device according to claim 6,
**characterised in that**
a heating energy, preferably from 10mWs to 1000mWs, especially 100mWs, can be transferred via a heating device (15) of the sensor means (13), especially of the micro-calorimeter or micro-anemometer, in order to heat a given volume (14) within the framework of determining the measurement parameters.

8. The cooling or heating metering device according claim 7,
**characterised in that**
the energy can be supplied via the heating device (15) of the sensor means (13) for 100ms to 10s, especially for 1s.

9. The cooling or heating metering device according to claim 8,
**characterised in that**
the measured value can be recorded several times within the energy-supply interval, especially 10 times per second during the energy supply.

10. The cooling or heating metering device according to any one of claims 7 to 9,
**characterised in that**
several temperature-specific heating curves are stored in the measuring device (2) or in the sensor means (13), wherein the recording of the measurement parameters is implemented within a substantially linear curve region, dependent upon the temperature-specific heating curve selected on the basis of the temperature of the mixture (8) measured by means of a temperature-measuring means (18) provided in the sensor.

11. The cooling or heating metering device according to claim 10,
**characterised in that**
the heating curves stored in the measuring device or the sensor means are, furthermore, specific for different mixture through-flows.

12. The cooling or heating metering device according to any one of the preceding claims,

**characterised in that**
the measured-value determination is implemented in a discontinuous manner, especially in measurement intervals of at least one day.

**13.** The cooling or heating metering device according to any one of the preceding claims,
**characterised in that**
an integrated energy supply (16), especially a battery, is provided to supply the sensor means (13).

**14.** The cooling or heating metering device according to any one of the preceding claims,
**characterised in that**
the type of one of the mixed fluids, especially the glycol, can be adjusted in the measuring device (2), and the measuring device (2) is embodied, dependent upon the adjustment, to take into consideration, within the framework of determining the specific heat capacity or the energy consumption, one or more type-specific computational values stored within it.

**15.** A method for determining the energy consumption in a tempering circuit containing a mixture of at least two liquids, especially a water-glycol mixture, by means of a cooling or heating metering device comprising a measuring device for determining the through-flow of mixture and the temperature difference between a forward flow and a return flow of the mixture, within which method at least one measurement parameter of the mixture is specified by a sensor means arranged in the mixture and passed to the measuring device, which determines the k-factor of the mixture, by means of a computer device, on the basis of the measurement parameter, and the energy consumption, taking the k-factor into consideration,
wherein a sensor means operating in a calorimetric or anemometric manner is used as the sensor means.

**16.** The method according to claim 15,
**characterised in that**
the temperature of the mixture, or a temperature difference determined on the basis of several measured temperature values of the mixture, or a supplied energy required to achieve a given temperature, or a temperature difference is specified via the sensor means as the measurement parameter.

**17.** The method according to claim 15,
**characterised in that**
a micro-calorimeter or a micro-anemometer is used as the sensor means.

**18.** The method according to claim 16 or 17, **characterised in that**
a heating energy, preferably of 10mWs to 1000mWs, especially 100mWs, is transferred via the sensor means, especially the micro-calorimeter or micro-anemometer, in order to heat a given volume within the framework of determining the measurement parameter.

**19.** The method according to claim 18,
**characterised in that**
the energy is supplied via the sensor means for 100ms to 10s, especially 1s.

**20.** The method according to any one of claims 16 to 19,
**characterised in that**
the measured value is recorded several times within the energy-supply interval, especially 10 times per second during the energy supply.

**21.** The method according to claim 20,
**characterised in that**
several temperature-specific heating curves are stored in the measuring device or in the sensor means, wherein the recording of the measurement parameters is implemented within a substantially linear curve region dependent upon the temperature of the mixture measured by means of a temperature-measuring means provided in the sensor, taking into consideration the heating curve selected in a temperature specific manner.

**22.** The method according to any one of claims 15 - 21,
**characterised in that**
the determination of the measured values is implemented in a discontinuous manner, especially in measurement

**EP 1 975 582 B1**

intervals of at least one day.

**Revendications**

1. Compteur de froid ou de chaud destiné à déterminer la consommation d'énergie dans un circuit d'équilibrage de température, dans lequel circule un mélange composé d'au moins deux liquides, en particulier un mélange d'eau et de glycol, comprenant un dispositif de mesure destiné à déterminer le débit du mélange et une différence de température entre l'aller et le retour du mélange, lequel dispositif de mesure détermine la consommation d'énergie en prenant en considération le débit et la différence de température, étant entendu que le dispositif de mesure (2) est conçu de façon à déterminer le facteur k du mélange (8) au moyen d'un dispositif de calcul (12) en prenant en considération au moins un paramètre de mesure transmis par un moyen de capteur (13) agencé dans le circuit (7) qui lui est subordonné et de façon à déterminer la consommation d'énergie en prenant en considération le facteur k, étant entendu que le moyen de capteur (13) est un moyen de capteur à fonctionnement calorimétrique ou anémométrique.

2. Compteur de froid ou de chaud selon la revendication 1 ou 2, **caractérisé en ce que** le moyen de capteur (13) est un microcalorimètre ou un micro-anémomètre.

3. Compteur de froid ou de chaud selon l'une des revendications précédentes, **caractérisé en ce que** le moyen de capteur (13) est intégré dans le dispositif de mesure (2).

4. Compteur de froid ou de chaud selon l'une des revendications 1 à 3, **caractérisé en ce que** le moyen de capteur (13), en particulier le microcalorimètre ou le micro-anémomètre, est agencé dans un logement de capteur propre formant un composant séparé du dispositif de mesure.

5. Compteur de froid ou de chaud selon l'une des revendications précédentes, **caractérisé en ce que** le moyen de capteur (13), en particulier le microcalorimètre ou le micro-anémomètre, est agencé dans une zone de faible circulation ou dans un espace nuisible de circulation.

6. Compteur de froid ou de chaud selon l'une des revendications précédentes, **caractérisé en ce que** la température du mélange ou une différence de température déterminée à partir de plusieurs valeurs de mesure de la température ou une énergie amenée nécessaire à l'obtention d'une température déterminée ou d'une différence de température peut être déterminée comme paramètre de mesure à l'aide du moyen de capteur.

7. Compteur de froid ou de chaud selon la revendication 6, **caractérisé en ce qu'**une énergie de chauffe, de préférence de 10 mWs à 1000 mWs, en particulier de 100 mWs, peut être transmise à l'aide d'un dispositif de chauffe (15) du moyen de capteur (13), en particulier du microcalorimètre ou du micro-anémomètre, afin de chauffer un volume déterminé (14) dans le cadre de la détermination du paramètre de mesure.

8. Compteur de froid ou de chaud selon la revendication 7, **caractérisé en ce que** l'énergie peut être amenée à l'aide du dispositif de chauffe (15) du moyen de capteur (13) pendant 100 ms à 10 s, en particulier pendant 1 s.

9. Compteur de froid ou de chaud selon la revendication 8, **caractérisé en ce que** pendant l'intervalle d'amenée d'énergie, la valeur de mesure peut être détectée plusieurs fois, en particulier dix fois par seconde, au cours de l'amenée d'énergie.

10. Compteur de froid ou de chaud selon l'une des revendications 7 à 9, **caractérisé en ce que** plusieurs courbes de chauffage spécifiques à une température sont enregistrées dans le dispositif de mesure (2) ou dans le moyen de capteur (13), étant entendu qu'en fonction de la courbe de chauffage spécifique à une température choisie sur la base de la température du mélange (8) mesurée à l'aide d'un moyen de mesure de température (18) prévu du côté du capteur, la détection des paramètres de mesure est réalisée dans une zone de courbe sensiblement linéaire.

11. Compteur de froid ou de chaud selon la revendication 10, **caractérisé en ce que** les courbes de chauffage enregistrées dans le dispositif de mesure ou le moyen de capteur sont en outre spécifiques pour différents débits du mélange.

12. Compteur de froid ou de chaud selon l'une des revendications précédentes, **caractérisé en ce que** la détermination

14

des valeurs de mesure est réalisée de façon discontinue, en particulier à des intervalles de mesure d'au moins un jour.

**13.** Compteur de froid ou de chaud selon l'une des revendications précédentes, **caractérisé en ce qu'**il est prévu une alimentation en énergie intégrée (16), en particulier une batterie, pour l'alimentation du moyen de capteur (13).

**14.** Compteur de froid ou de chaud selon l'une des revendications précédentes, **caractérisé en ce que** la nature d'un des liquides du mélange, en particulier du glycol, peut être réglée au niveau du dispositif de mesure (2) et **en ce que** le dispositif de mesure (2) est conçu de façon à prendre en considération, en fonction du réglage, une ou plusieurs valeurs de calcul spécifiques à cette nature enregistrées dans celui-ci dans le cadre de la détermination de la capacité thermique spécifique ou de la consommation d'énergie.

**15.** Procédé de détermination de la consommation d'énergie dans un circuit d'équilibrage de température contenant un mélange composé d'au moins deux liquides, en particulier un mélange d'eau et de glycol, au moyen d'un compteur de froid ou de chaud comprenant un dispositif de mesure destiné à déterminer le débit du mélange et la différence de température entre un aller du mélange et un retour du mélange, dans lequel procédé au moins un paramètre de mesure du mélange est déterminé à l'aide d'un moyen de capteur agencé dans le mélange et transmis au dispositif de mesure, lequel détermine le facteur k du mélange sur la base du paramètre de mesure au moyen d'un dispositif de calcul et détermine la consommation d'énergie en prenant en considération le facteur k, étant entendu qu'un moyen de capteur à fonctionnement calorimétrique ou anémométrique est utilisé comme moyen de capteur.

**16.** Procédé selon la revendication 15, **caractérisé en ce que** la température du mélange ou une différence de température déterminée à partir de plusieurs valeurs de mesure de la température du mélange ou une énergie amenée nécessaire à l'obtention d'une température déterminée ou d'une différence de température est déterminée comme paramètre de mesure à l'aide du moyen de capteur.

**17.** Procédé selon la revendication 15, **caractérisé en ce qu'**un microcalorimètre ou un micro-anémomètre est utilisé comme moyen de capteur.

**18.** Procédé selon la revendication 16 ou 17, **caractérisé en ce qu'**une énergie de chauffe, de préférence de 10 mWs à 1000 mWs, en particulier de 100 mWs, est transmise à l'aide du moyen de capteur, en particulier du microcalorimètre ou du micro-anémomètre, afin de chauffer un volume déterminé dans le cadre de la détermination du paramètre de mesure.

**19.** Procédé selon la revendication 18, **caractérisé en ce que** l'énergie est amenée à l'aide du moyen de capteur pendant 100 ms à 10 s, en particulier pendant 1 s.

**20.** Procédé selon l'une des revendications 16 à 19, **caractérisé en ce que** pendant l'intervalle d'amenée d'énergie, la valeur de mesure est détectée plusieurs fois, en particulier dix fois par seconde, au cours de l'amenée d'énergie.

**21.** Procédé selon la revendication 20, **caractérisé en ce que** plusieurs courbes de chauffage spécifiques à une température sont enregistrées dans le dispositif de mesure ou dans le moyen de capteur, étant entendu qu'en fonction de la courbe de chauffage spécifique à une température choisie sur la base de la température du mélange mesurée à l'aide d'un moyen de mesure de température prévu du côté du capteur, la détection des paramètres de mesure est réalisée dans une zone de courbe sensiblement linéaire.

**22.** Procédé selon l'une des revendications 15 à 21, **caractérisé en ce que** la détermination des valeurs de mesure est réalisée de façon discontinue, en particulier à des intervalles de mesure d'au moins un jour.

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2504797 A1
- DE 2711438 A1
- DE 19739367 A1
- US 4440507 A

**In der Beschreibung aufgeführte Nicht-Patentliteratur**

- **FRANZ ADUNKA.** Theorie der exakten Wärmemengenmessung. Vulkan Verlag, 1984, 16 ff